(19) Europäisches Patentamt
European Patent Office
Office européen des brevets

(11) **EP 0 643 472 B1**

(12) **EUROPÄISCHE PATENTSCHRIFT**

(45) Veröffentlichungstag und Bekanntmachung des Hinweises auf die Patenterteilung:
**22.04.1998 Patentblatt 1998/17**

(51) Int Cl.⁶: **H02P 1/00**, G05B 19/414

(21) Anmeldenummer: **94114242.4**

(22) Anmeldetag: **09.09.1994**

(54) **Servo-Regelantrieb**

Servo-controller

Servo-contrôle

(84) Benannte Vertragsstaaten:
**AT CH DE FR IT LI**

(30) Priorität: **08.02.1994 CH 353/94**
**11.09.1993 CH 2733/93**
**27.10.1993 WOPCT/CH93/00251**

(43) Veröffentlichungstag der Anmeldung:
**15.03.1995 Patentblatt 1995/11**

(73) Patentinhaber: **ProControl AG**
**9230 Flawil (CH)**

(72) Erfinder:
• **Siegrist, Ronald**
**CH-9242 Oberuzwil (CH)**
• **Stillhard, Bruno**
**CH-9011 St. Gallen (CH)**

• **Blöchlinger, Hugo**
**CH-9230 Flawil (CH)**

(74) Vertreter: **Ackermann, Ernst**
**Egghalde**
**9231 Egg-Flawil (CH)**

(56) Entgegenhaltungen:
**EP-A- 0 077 178**          **US-A- 4 891 764**

• **PATENT ABSTRACTS OF JAPAN vol. 10, no. 254 (P-492) (2310) 30. August 1986 & JP-A-61 080 406 (HITACHI LTD.) 24. April 1986**
• **PATENT ABSTRACTS OF JAPAN vol. 9, no. 174 (P-374) 19. Juli 1985 & JP-A-60 048 504 (HITACHI SEISAKUSHO K.K.) 16. März 1985**

**Beschreibung**

Die Erfindung betrifft einen Regelantrieb für elektromotorisch angetriebene Achsen bzw. für Regelgrössen einer oder mehrerer Achsen von Maschinen, der eine Steuer- und Regelvorrichtung mit einem oder mehreren internen Signalrechner/n (20) aufweist, welcher/welche insbesondere die folgenden Funktionen umfasst/umfassen: Phasenwinkelsteller ($\phi$), Strom- (I) und Geschwindigkeitsregler (V) sowie die Verwendung desselben.

Die Regelungstechnik hat in den zwei vergangenen Jahrzehnten eine enorme Wandlung erfahren. Lange wurde die Closed-Loop-Regelung als höhere Stufe gegenüber einer einfachen Steuerung eingeschätzt. Die blosse Steuertechnik setzt normalerweise bessere Kenntnisse des Arbeits-Prozesses voraus, wenn höchste Qualitäten erreicht werden sollen. Eine Regelung wird vielfach dann eingesetzt, wenn die Prozess-Einflussparameter nicht genügend oder nicht alle bekannt sind. Bis weit in die 80er Jahre galt sozusagen als höchste Entwicklungsstufe die Verwendung eines Prozessrechners. Gestützt auf die Signale von Sensoren an der Verarbeitungsmaschine oder von messtechnisch erfassten Produktparametern, wurden alle Hauptfunktionen von dem Prozessrechner zentral koordiniert und gesteuert bzw. geregelt. Dieses Modell wurde in der Folge abgelöst durch die sogenannten speicherprogrammierbaren Steuerungen (SPS), welchen jedoch für aufwendigere Rechneraufgaben ein Mikroprozessor zugeordnet wurde. Dabei wurde der SPS die Steuer- und Verriegelungsfunktionen, teils aber auch Startprogramme, Anlaufprogramme usw. zugeordnet. Der Mikroprozessor übernahm einen Teil der Prozessregelung.

Seit einiger Zeit haben Servomotoren bei vielen Verarbeitungsmaschinen, z.Bsp. auch bei Spritzgiessmaschinen eine immer grössere Verbreitung gefunden. Die motorisch erzeugte Drehbewegung wird dabei als solche übersetzt und nach Bedarf in eine translatorische Bewegung umgesetzt. Mit Servomotoren können mit überraschend hoher Genauigkeit, über die Kontrolle des elektrischen Feldes ($\phi$) sowie die Stromregelung (I), bzw. einer entsprechenden Momentregelung für die Motorachse, sowohl die Position wie die Geschwindigkeit der Achse von einem Interpolator nach vorgegebenen Sollwerten beherrscht werden. Eine Maschinensteuerung weist heute für die Prozesssteuerung und -Regelung eine CNC-Steuerung auf. Die Servomotoren sind bedingt durch ihren Einsatz auf die ganze Maschine verteilt. Die zusammenwirkenden Steuer- und Regelvorrichtungen - nachfolgend als Drives bezeichnet - können eine Gruppe bilden. Von den Interpolatoren findet über die dazu benötigte Verdrahtung zu jedem Drive, entweder eine frequenzielle oder eine analoge Datenübertragung statt. Signale werden bei der Analogübertragung in Form einer Spannung mit einem Wert im Bereich von plus-minus 10 Volt übertragen. Der Nachteil dieser Lösung liegt darin, dass die Datenübertragung, an sich einen Problemkreis darstellt. Die Signalleitungen, insbesondere für die Regelaufgaben, müssen speziell gegen Störfelder geschützt werden. Es können die sehr vorteilhaften Bussysteme nicht oder nur sehr beschränkt eingesetzt werden, da die Geschwindigkeit der Datenübertragung mit dem Bussystem nicht mehr gewährleistet ist. Die Integrierung des Interpolators in die CNC-Steuerung ist zur Zeit die opitmalste Lösung, wobei festgestellt wird, dass die Systeme als Ganzes bis an ihre Leistungsgrenze ausgeschöpft sind. Eine weitere Erhöhung der Beherrschbarkeit des Prozesses könnte nur mit unverhältinsmässigem Einsatz erreicht werden. Regelantriebe der eingangs genannten Art sind beispielsweise aus den nachfolgenden Druckschriften bekannt: EP 331 733; DE 43 14 722; EP 273 979; EP 224 589; EP 382 857; EP 363 498; US 4 805 112; US 4 826 418 und US 5 251 146.

Diese Beispiele zeigen alle Regelantriebe, vorwiegend für Spritzgiessmaschinen, mit einer oder mehreren elektromotorisch angetriebenen Achse/n. Den Regelantrieben liegt dabei ein gemeinsames Prinzip zugrunde: Sie enthalten eine zentrale Recheneinheit, von der aus alle Steuer- bzw. Regelbefehle für die zu beeinflussenden Achsen abgesendet sowie die gesamte Datenmenge an Messwerten der Regelgrössen empfangen werden. Daher haben diese bekannten Regelantriebe den zuvor erwähnten Nachteil.

Der Erfindung wurde nun die Aufgabe gestellt, den Arbeitsablauf von Maschinen bzw. Verarbeitungsmaschinen über Servo-Regelantriebe in noch höherem Grad zu beherrschen, so dass je nach Einsatz, z.Bsp. eine wesentliche Leistungssteigerung und/oder eine Steigerung der Reproduzierbarkeit und/oder der Qualität möglich werden.

Die Erfindung löst die Aufgabe gemäss einer ersten Ausgestaltung dadurch, dass ein getrennt anbringbares, von einem Maschinenrechner unabhängiges Modul zum autonomen Steuern oder Regeln der Achsen (M1, M2, M3) vorgesehen ist, welches neben dem oder den Signalrechner/n einen diesem oder diesen übergeordneten Prozessrechner aufweist, der zur verzögerungsfreien, Echtzeit bzw. gleichzeitigen Steuerung oder Regelung der Achsen (M1, M2, M3) ausgelegt ist und seine notwendigen Informationen aus einem im Modul vorgesehenen Speicher bezieht.

Eine zweite sehr vorteilhafte Ausgestaltung ist dadurch gekennzeichnet, dass ein getrennt anbringbarer, von einem Maschinenrechner unabhängiger Mehrgrössen-Regler zum autonomen Steuern oder Regeln der Regelgrössen vorgesehen ist, der neben dem Signalrechner einen diesem übergeordneten Prozessrecher (22) aufweist, der zur verzögerungsfreien Echtzeit, bzw. gleichzeitigen selektiven Steuerung oder Regelung der Regelgrössen ausgelegt ist und seine notwendigen Informationen aus einem im Mehrgrössen-Regler vorgesehenen Speicher bezieht.

Die erfindungsgemässe Lösung betrifft ferner die Verwendung des Regelantriebes nach einem der vorstehenden Ansprüche für Roboter, einschliesslich Schweissroboter, Druckgussmaschinen, Krane, Spritzgiessmaschinen, Giess- und Pressmaschinen, Textil- und Papierverarbeitungsmaschinen sowie Werkzeugmaschinen.

Der erfindungsgemässe Servo-Regelantrieb weist danach unter anderem eine Kontrolleinheit bestehend aus einer Driveintelligenz mit dem Prozessrechner sowie dem Speicher bzw. Arbeitsspeicher für Rezepte bzw. Programme auf, welche zur Regelung von wenigstens zwei Achsen ausgelegt ist. Von den Erfindern ist erkannt worden, dass man für die jüngste Entwicklung auf falschen Annahmen basierte. Sehr anschaulich kann dies an dem Modell der Raumbewegung eines Krans oder eines Roboters verständlich gemacht werden. Der Robotergreifer bewegt sich üblicherweise in allen drei Raumrichtungen. Der bisherige Ansatz lag darin, dass die resultierende Bewegung des Greifers von dem Roboter dann beherrscht wird, wenn jede Teilbewegung in jeder der drei Raumrichtungen (bei drei Achsen) beherrscht wird. Der Rechner müsste nur schnell genug sein, und die Befehle an jeden Drive richtig gegeben werden. Vorausgesetzt, dass die Berechnung der Raumkurve genau genug war, nahm man an, dass das Resultat sozusagen zu 100 % stimmen müsste. In der Praxis ist dies aber leider nicht der Fall. Es treten bekanntlich variierende Massenträgheiten, Reibkräfte und andere Widerstände usw. auf, welche man mit extrem grossen Fehlerkorrekturprogrammen auszuschalten versucht. Dies aber oft mit nur teilweisem Erfolg.

Der erste Fehlansatz lag darin, dass das Problem dreidimensional betrachtet und dann einfach in die drei Dimensionen zerlegt bzw. reduziert wurde. Tatsächlich aber ist das Problem mehr als dreidimensional, da sich zum Beispiel die Zeit über Geschwindigkeitsänderungen so auswirkt wie wenn eine 4. Dimension vorhanden wäre. Damit aber ist der mathematische Ansatz, nur auf den drei Raumdimensionen aufbauend, falsch. Der zweite Fehlansatz lag darin, dass der Faktor der gegenseitigen Beeinflussung der drei Raumbewegungen sehr gross ist, wenn Reibung, wechselnde Trägheitskräfte, variierende Geschwindigkeiten usw. vorhanden sind. Auch der beste mathematische Ansatz kann letztlich nur eine grobe Näherung sein. Jede Beherrschung eines Arbeitsprozesses wird in dem Mikrobereich ($\mu$ sec. / $\mu$ mm usw.) über eine starre Steuerlogik oder Regellogik unmöglich, wenn nichtlogische Funktionen grossen Einfluss haben. Die dritte, möglicherweise gravierenste Fehlannahme lag darin, dass die Leistungsfähigkeit bzw. die Verarbeitungsgeschwindigkeit von Prozessrechnern und die Signalübertragung in Datenübertragungssystemen mit Lichtgeschwindigkeit, als so gross angenommen wurde, dass es gar keine Rolle mehr spielt, an welcher Stelle in einem System die Datenverarbeitung geschieht. Man ging von einer beinahe Gleichzeitigkeit aus. Viele Praxisfälle zeigten, dass alle komplexen Informationsübertragungssysteme relativ grosse Zeitspannen bis zu Sekunden von der ersten Signal-Auslösung bis zur Durchführung eines Befehls brauchen. Bedingt ist dies z.Bsp. durch die vielen Schnittstellen, und Umformungen aber auch durch Übertragungssicherungen, durch Sicherheitssysteme mit Auftrags- und Meldebestätigungen. Bei komplexeren Systemen müssten oft mehrere Rechenaufgaben gleichzeitig gelöst werden. Die Summierung selbst kleinster Zeitverzögerungen ergibt ein träges System, das sich für Regelfunktionen schlecht eignet. Der eigentliche Fehler liegt darin, dass die innere Regelungstechnik des Servo-Regel-Antriebes getrennt bearbeitet wurde von der eigentlichen Prozessregelung bzw. Arbeitsprozesssteuerung.

Die Erfinder haben ferner erkannt, dass die Lösung nur darin bestehen kann, dass der Korrektureingriff für die Prozesssteuerung oder -regelung möglichst an dem Ort des Geschehens und dort möglichst schnell durchgeführt wird. Es muss ein unmittelbares Zusammenwirken vor Ort, nämlich in dem Drive von jeder Steuer- und Regelfunktion erfolgen. Wird den Drives eine gemeinsame Kontrolleinheit bzw. ein gemeinsamer Prozessrechner unmittelbar zugeordnet so kann mit nahezu Gleichzeitigkeit die Feldkontrolle sowie Strom-, Lage- sowie Geschwindigkeitsregelung aller Drives koordiniert werden. Dem Gedanken einer gemeinsamen Kontrolleinheit kommt der spezifische Aufbau der an sich bekannten Driverechner entgegen. Diese Drive weisen bereits einen internen $\varphi$-Kontroller sowie je einen I-, V- und Positionsregler auf. Diese erlauben selbst bei stark wechselnden Kräften in der Maschine z.Bsp. eine Positionierung über der Zeit mit extrem hoher Genauigkeit. Die Kontrolleinheit kann als Interpolator nahezu ohne Zeitverlust z. Bsp. die Positionsregler für zwei oder drei Achsen koordinieren. Dazu besitzt die Kontrolleinheit mit der Driveintelligenz die erforderliche Rechnerleistung. Der Kontrolleinheit sind alle unmittelbar benötigten Werte als ganze Rezepte oder Programme vor Ort verfügbar. Damit entsteht im Rahmen eines vorgegebenen Rezeptes eine Funktionseinheit, die als ein echter, hoch sensitiver Regler auch für zwei Achsen arbeiten kann. Das Kommunikationssystem wird nicht mehr belastet, umgekehrt verzögert das Kommunikationssystem die Prozessregelung nicht mehr. Die Synchronisation von zwei oder mehr geregelten Achsen kann auf diese Weise mit einem bisher nicht erreichten Grad an Vollkommenheit sichergestellt werden. Die Erfindung erlaubt eine echte und gleichzeitige Zusammenarbeit für alle Achsen, da hierzu die räumliche Distanz und eine nachteilige Datenübertragung über einen Bus für die eigentliche Regelfunktion entfällt. Vorteilhafterweise wird der Mehrfachdrive als Baueinheit mit integriertem Programmspeicher und Driverechner mit vorzugsweise digitaler Signalverarbeitung zur mehrachsigen Synchronisation von Bewegungs- und/oder Bahnkurven für eine elektrisch, über mehrere Servo-Motoren angetriebene Maschine, verwendet.

Im Stand der Technik wurde der Prozessrecher als selbstständiges Hirn benutzt, der über die notwendige Anzahl Sensoren den Prozess lenkte. Bei Servomotoren können nun z.Bsp. der Lage-Ist-Wert und der Geschwindigkeits-Ist-Wert direkt aus dem Signalrechner entnommen werden. Prozessrechner und Signalrechner arbeiten gemäss der neuen Erfindung gestützt auf die ihnen zugeteilten Rezepte als geschlossene Funktionseinheit als ein intelligenter "Vor-Ort-Regler". Wie in der Folge gezeigt wird, erlaubt die neue Erfindung wahlweise die je momentan benötigte Parameter, sei es zu steuern oder regeln, besonders auch im Closed-Loop zu regeln, z.Bsp. für die Bewegung von einem Roboter oder einem Kranhaken.

Die Erfindung erlaubt eine ganze Anzahl vorteilhafter Ausgestaltungen, die in den Ansprüchen 2 und 4 bis 13 beschrieben sind. Danach ist z.Bsp. der Prozessrecher als eine Funktionseinheit als Mehrgrössen-Prozess-Kontroller bzw. Mehrgrössen-Regler ausgebildet, dem als Zielgrössen Grenzwerte von Regelgrössen (z.Bsp. Kraft und/oder Geschwindigkeit und/oder Weg), eingebbar sind, zur grösstmöglichen Annäherung an Zielgrössen-Sollwerte. Bis heute besteht in vielen Verarbeitunsprozessen, wie z.Bsp. beim Spritzgiessen, ein Streit. Welche von den physikalischen Parametern sollen, und wie müssen sie beherrscht werden, über eine

- Maschinenparameter-Steuerung, oder eine
- Maschinenparameter-Regelung; über eine
- Prozess(parameter)-Steuerung oder eine
- Prozess(parameter)-Regelung; und/oder eine
- Produkteigenschaft-Reglung.

Der neue Mehrgrössen-Regler beantwortet alle diese Fragen optimal. Von den Erfindern ist erkannt worden, dass in der Praxis für die Beherrschung des Arbeitsprozesses sehr selten alle Paramter gleichzeitig einer möglichst vollkommenen starren Regelung unterworfen werden müssen. Sehr häufig besteht nämlich die Aufgabe darin, schnell von einem Punkt 0 nach Punkt B zu gelangen, wobei jedoch z.Bsp. eine bestimmte Geschwindigkeit bzw. Beschleunigung, eine bestimmte Kraft und eine bestimmte Wegmarke nicht überschritten werden dürfen. In einer ersten Phase wird häufig die Geschwindigkeit bzw. die Beschleunigung, die kritische und tatsächlich zu regelnde Grösse sein. Ergibt sich von dem Verarbeitungsprozess eine Gegenkraft, so kann diese sich als kritische Grösse ergeben, so dass z.Bsp. die Geschwindigkeit reduziert oder gestoppt werden muss. Eine Regelung z.Bsp. im Closed-Loop erfolgt dann allein auf eine bestimmte Kraft oder einen bestimmten Druck, z.Bsp. mit einem Soll-Drehmoment-Verlauf. In einer Endphase, bei Annäherung an den Punkt B kann die Positionsregelung aktiv werden. Die jeweils nicht aktiven Regel-Parameter bleiben überwacht, werden regelungstechnisch abschnittweise jedoch nicht beachtet. Die Erfindung erlaubt damit je nach momentaner Anforderung im Rahmen von Zielgrössen zu steuern oder zu regeln bzw. nicht zu steuern oder nicht zu regeln.

Gemäss einer vorteilhaften Ausführungform ist der Mehrgrössen-Regler - mit vorzugsweise digitaler Signalverarbeitung (in Software) - kaskadenartig regel- bzw. begrenzbar. Es ist ohne weiteres möglich, dass mehrere Arbeits-Phasen mit unterschiedlichen Zielgrössen (z.Bsp. Kraft oder Geschwindigkeit oder Weg) in dem Mehrgrössen-Kontroller festlegbar sind, welche vorzugsweise über das Geschwindigkeitssignal zu dem Drive regel- bzw. begrenzbar sind. Ganz besonders für zyklische Arbeitsprozesse, wie z.Bsp. bei Schweissrobotern oder bei Druck- und Spritzgiessmaschinen oder in der Papier- oder Druckindustrie, können damit für je einen ganzen Arbeitszyklus alle erforderlichen und teils wechselnden Sollwerte in den Arbeitsspeicher gegeben werden, so dass auch Übergänge von einer Phase in eine andere innerhalb eines Zykluses ohne Totzeit bewältigbar sind. Gemäss einer weiteren Ausgestaltung ist als Stellgrösse an den elektromotorischen Antrieb (Achse) der Geschwindigkeitseingang (V) oder der Stromeingang (I) wählbar, wobei die Ist-Geschwindigkeit und die Ist-Position aus dem Drive nehmbar bzw. berechenbar ist. In vielen Fällen können so mit einem Minimum an Sensoren in dem Bereich der Verarbeitungsmaschine optimale Ergebnisse erzielt werden. Gemäss einem weiteren Vorschlag werden in einem Grosssignalbereich, d.h. bei grossen Regelabweichungen das Geschwindigkeits-Stellsignal zu dem Drive mit einer parabelartigen bzw. einer wurzelartigen Funktion der Druck-Soll-Ist-Abweichung und/oder die Weg-Soll-Ist-Abweichung vorzugsweise mit dem grösstmöglichen Verstärkungsfaktor berechnet zur Annäherung an die grösstmögliche Beschleunigung des Servomotores, besonders vorzugsweise im wesentlichen mit der Formel:

$$-\sqrt{|(Psoll - Pist)|} \times kp = \pm Stg. \text{ (Stellgrösse) bzw.}$$

$$-\sqrt{|(Ssoll - Sist)|} \times ks = \pm Stg.$$

Vor allem im Grossignalbereich kann ferner der Verstärkungsfaktor K1 bzw. K2 (Figur 8) unsymetrisch sein, und/oder im Kleinst-Signalbereich, d.h. bei kleinen Regelabweichungen, kann zur Erreichung der Stabilität das Geschwindigkeits-Stellsignal, d.h. bei kleinen Regelabweichungen, kann zu dem Drive als lineare Funktion der Soll-Ist-Abweichung berechnet werden.

In vielen Fällen kann als Stellgrösse an dem elektrischen Antrieb der Geschwindigkeitseingang gewählt werden, wenn abtriebsseitig von dem elektromotorischen Antrieb wenigstens ein mechanisch, elastisches Systemteil bzw. ein federndes Element vorhanden ist. Als elektromotorischer Antrieb können insbesondere Motoren mit Servomotor-Charakteristik, z.Bsp. ein permanent erregter Servomotor oder ein vektoriell geregelter Asynchronmotor (z.Bsp. Kurzschlussläufer), oder ein geregelter Gleichstommotor verwendet werden. Ferner ist es auch möglich, AC- und DC-Servomotoren oder DC-brushless-Motoren oder sehr preisgünstige Reluctance-Motoren, vorzugsweise Switched Reluctance-Motoren, einzusetzen. Gemäss einem weiteren sehr vorteilhaften Ausgestaltungsgedanken ist der Prozessrechner für drei oder mehr Achsen ausgelegt; er weist eine Schnittstelle auf, zur Verbindung mit einem Datenübertragungssystem an einen Maschinenrechner, wobei der Arbeitsablauf vorzugsweise in dem Maschinen-Rechner definiert und die entsprechenden Werte, Sollwerte, Grenzwerte usw., als Rezepte bzw. Programme vorgebbar und über das Datenübertragungssystem in den Arbeitsspeicher der Driveintelligenz des Prozessrechners einlesbar sind. Das Datenübertragungssystem wird vorzugsweise als Datenbus, besonders vorzugsweise als Sensor/Actor Businterface bzw. Can-Bus ausgebildet. Sehr vorteilhaft ist ferner, wenn zumindest für einzelne Werte ein Sicherheitsgrenzband bzw. ein Toleranzband von dem Maschinenrechner festgelegt und dem Prozessrechner als Teil des Rezeptes bzw. des Programmes übermittelt wird, zur Steuerung bzw. Überwachung z.Bsp. von speziellen Phasen. Dabei wird z.Bsp. für einzelne Achsen bei Überschreitung des Toleranzbandes die Bewegung gestoppt und/oder umgekehrt. Auf diese Weise können nicht nur sehr vorteilhafte Sicherheitsfunktionen für die Maschinenteile sondern auch für die Produktqualitäten wirkungsvoll beherrscht werden. Bei sehr vielen Maschinen sind durch den Arbeitsprozess gegebene Funktionsgruppen vorhanden. Es ist ohne weiteres möglich, unabhänig von der Funktionsgruppe alle Achsen durch eine einzige Gross-Kontrolleinheit zu koordinieren. Aus Gründen der Systemübersicht, der Störkontrolle und evtl. Standardisierung wird als besonders bevorzugte Lösung vorgeschlagen bei Arbeitsmaschinen, die mehr als 4 resp. 5 Achsen haben, zwei oder mehrere Kontrolleinheiten bzw. Module vorzusehen, wobei jedes Modul als Funktionsgruppe zwei oder drei Achsen koordiert. Der Maschinenrechner kann als Rechner-Speicher, z.Bsp. als kostengünstiger PC ausgebildet sein, und Grundprogramme bzw. Grundrezepte insbesondere alle Startprogramme und Ablaufprogramme abrufbereit speichern. Das ganze System wird auf diese Weise als dezentrales offenes System modular ausgebildet. Damit können die einzelnen Hardware-Teile oder die Software selektiv den jeweiligen Neuentwicklungen angepasst werden.

In der Folge wird die Erfindung nun an Hand einiger Ausführungsbeispiele dargestellt. Es zeigen:

| | |
|---|---|
| die Figur 1 | schematisch die zentralen Funktionselemente für einen Mehrgrössen-Regler; |
| die Figur 2 | ein Steuerkonzept für eine Mehrachs-Steuer- und Regelvorrichtung; |
| die Figur 3 | eine Mehrachs-Steuer- und Regelvorrichtung figürlich dargestellt; |
| die Figur 4 | eine räumliche Bewegungskurve 0 - E; |
| die Figur 5 | die Bewegung von einem Punkt 0 zu A und B in einer Ebene; |
| die Figur 6, 6a, 6b | verschiedene Ausbaustufen eines linearparabolischen Reglers; |
| die Figur 7 | einen Vergleich der statischen Druck-Weg-Kennlinie mit linearem und nicht linearem Regler; |
| die Figur 8 | ein Beispiel einer optimierten linear/parabolischen Funktion: |
| die Figur 9 | schematisch ein vollständiges Steuerkonzept an Hand einer Spritzgiessmaschine mit je einem Spritzmodul sowie einem Form-Modul. |

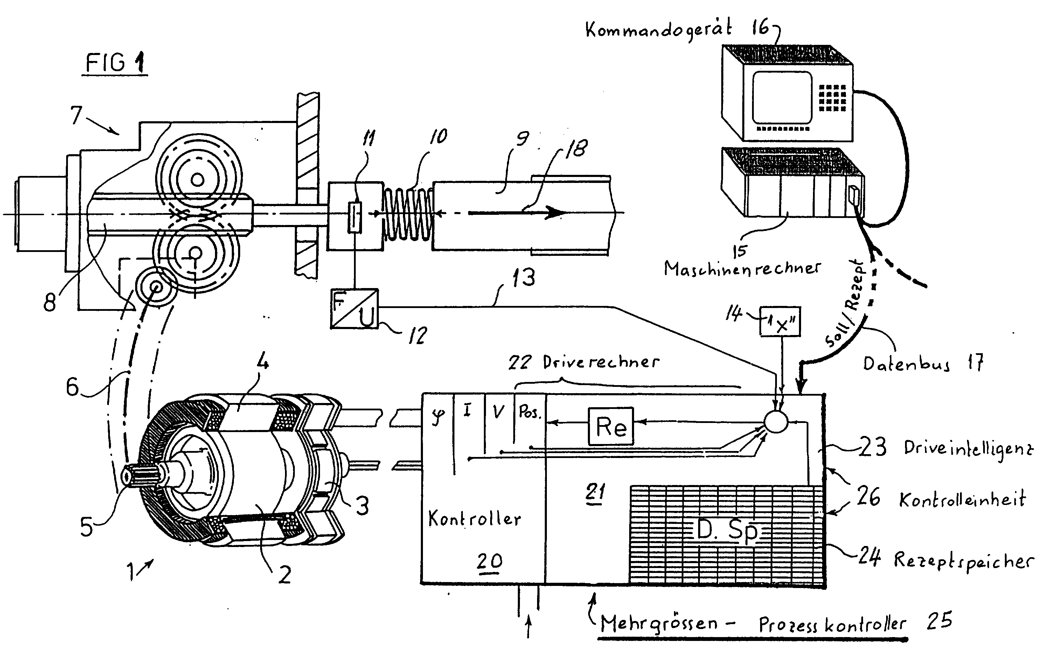

In der Folge wird nun auf die Figur 1 Bezug genommen. Ein Antriebsmotor 1 weist einen Rotor 2 mit Permanentmagnet sowie einem Positionssensor 3 auf. Der Stator 4 weist mehrere, meistens drei, Wicklungen sowie einen Inverter auf. Über ein Abtriebsritzel 5, das fest auf der Welle des Rotors 2 aufgekeilt ist, wird über einen Übertrieb 6, welcher zum Beispiel ein Zahnriemen, bevorzugt jedoch ein Zahnradübertrieb ist, ein eigentliches Übersetzungsgetriebe 7 angetrieben. Das Übersetzungsgetriebe 7 formt die Rotationsbewegung des motorischen Antriebes in eine Linearbewegung um, welche direkt auf eine Zahnstange 8 aufgebracht wird. Die Zahnstange 8 ist kraftschlüssig verbunden mit der Arbeitswelle 9, so dass die entsprechende Rotationsbewegung des Rotors 2 unmittelbar in eine Linearbewegung 18 umgeformt wird und die vom Arbeitsprozess verlangte Bewegung durchführt.

Anstelle des dargestellten Übertriebes 6 kann aber auch die Welle des Rotors 2 direkt mit einer Arbeitswelle verbunden werden. Für die Umsetzung der Drehbewegung in eine Linearbewegung kann zum Beispiel auch eine Kugelspindel dazwischen angeordnet werden. Zwischen der Zahnstange 8 sowie der Arbeitswelle 9 ist eine Feder 10 eingebaut. Die Feder 10 kann eine physische Druckfeder sein, oder eine entsprechende Elastizität des machanischen Systems oder aber die Elastizität der herzustellenden Teile. Im Falle einer Spritzgiessmaschine kann die flüssige Kunststoffmasse die Elastizität sein. Ein Kraft- oder Druckaufnehmer 11 stellt die momentane Kraft bzw. den Druck fest und gibt über einen Sensor bzw. Wandler 12 sowie eine Signalleitung 13 die entsprechende Information an einen Mehrgrössen-Prozesskontroller bzw. Regler 25. Der Mehrgrössen-Prozesskontroller weist eine Kontrolleinheit 26 auf, bestehend aus einer Driveintelligenz 23 sowie einem Rezeptspeicher 24. Die Driveintelligenz 23 ist in direktem Arbeitsverbund mit einem Prozess- bzw. Driverechner 22 der über einen Interpolator 21 sowie einem Kontroller 20 die Bewegung des Rotores 2 steuert bzw. regelt. Mit 14 resp. "X" sind ein oder mehrere Funktionsparameter als "Ist-Werte" von der Maschine, von dem Prozess oder von dem Produkt symbolisiert, welche je nach Erfordernis als Steuer-Regel- oder Begrenzungsfunktion kontrolliert werden müssen. Die Rezepte resp. Programme werden über ein Kommandogerät 16 bzw. einem Maschinenrechner 15 sowie einem Datenbus 17 in den Datenspeicher 24 der Driveintelligenz 23 eingelesen.

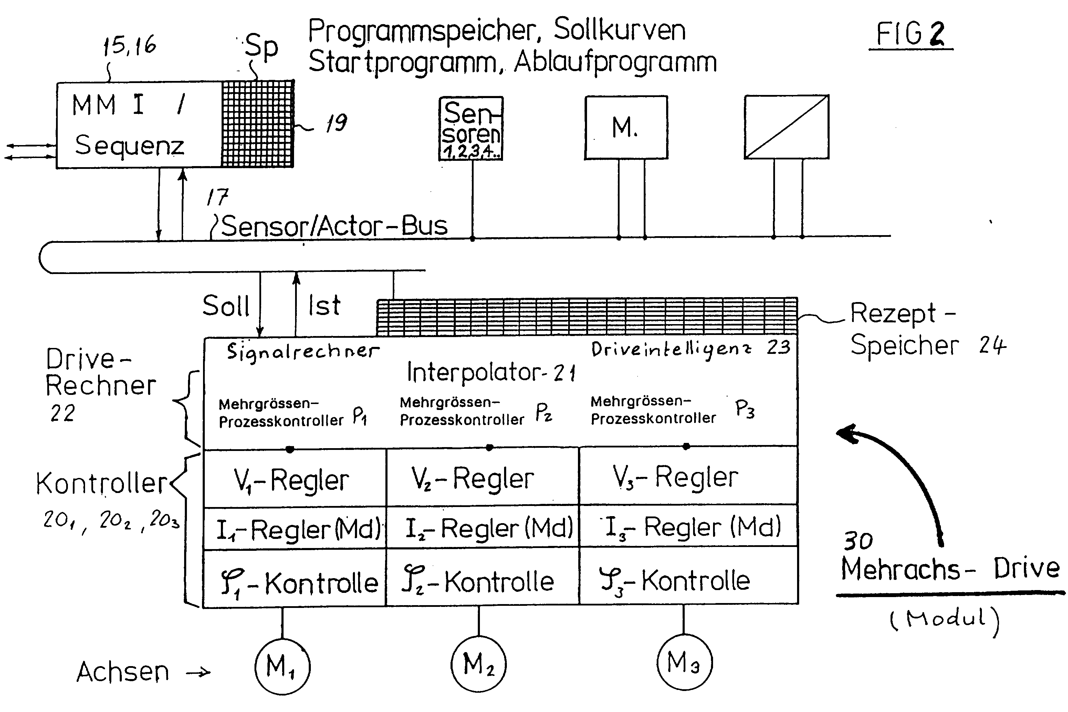

In der Figur 2 ist ein vorteilhaftes Grundschema dargestellt, das die Hauptfunktionselemente für eine(n) Mehrachsendrive bzw. Mehrachsen-Steuer/Regelvorrichtung 30 darstellt. Die Figur 2 ist gleichzeitig auch ein entsprechender Ausschnitt aus der Figur 1. Der Maschinenrechner 15 mit einem Rechner-Datenspeicher 19 ist über einen Bus bzw. einen Sen- sor/Actor-Bus 17 an den Mehrachsdrive 30 verbunden, welcher aus drei Signalrechnern bzw. Kontrollern 20 (20.2; 20.2; 20.3 usw.) und dem Driverechner 22 mit Rezeptspeicher 24 besteht. Der Driverechner 22 besteht aus dem Interpolator 21 und drei Positionsreglern Pos. M1, Pos. M2 Pos. M3, die als Funktionseinheit die bestmögliche und kürzestmögliche Koordinierung aller Positionsregler gewährleistet. Jeder Kontroller 20 weist je einen eigenen Geschwindigkeitsregler (V-Regler, V-1, V-2, V-3) sowie einen Stromregler (I-Regler, I1, I2, I3), der das Drehmoment regelt, sowie Feld-Kontroller ($\varphi$-Kontrolle, $\varphi 1$, $\varphi 2$, $\varphi 3$) auf, und ist jeweils mit einer Achse resp. dem entsprechenden Motor M1, M2 resp. M3 verbunden. An dem Sensor/Actor-Bus 17 können auch alle notwendigen Signal- oder Steuerverbindungen der Maschine wie Schalter, Kontrollen, Sensoren, Hilfsmotoren usw. angeschlossen werden, z.Bsp. gemäss Figur 1. Die Hochgeschwindigkeitsverarbeitung für alle Regelaufgaben findet jedoch direkt in dem Mehrachsdrive 30 statt, und zwar auf Grund von Sollwerten, Grenzwerten, bzw. einem entsprechenden Rezept, und Toleranzwerten, die für jede spezifische Arbeit von dem Rechner-Datenspeicher 19 übermittelt werden.

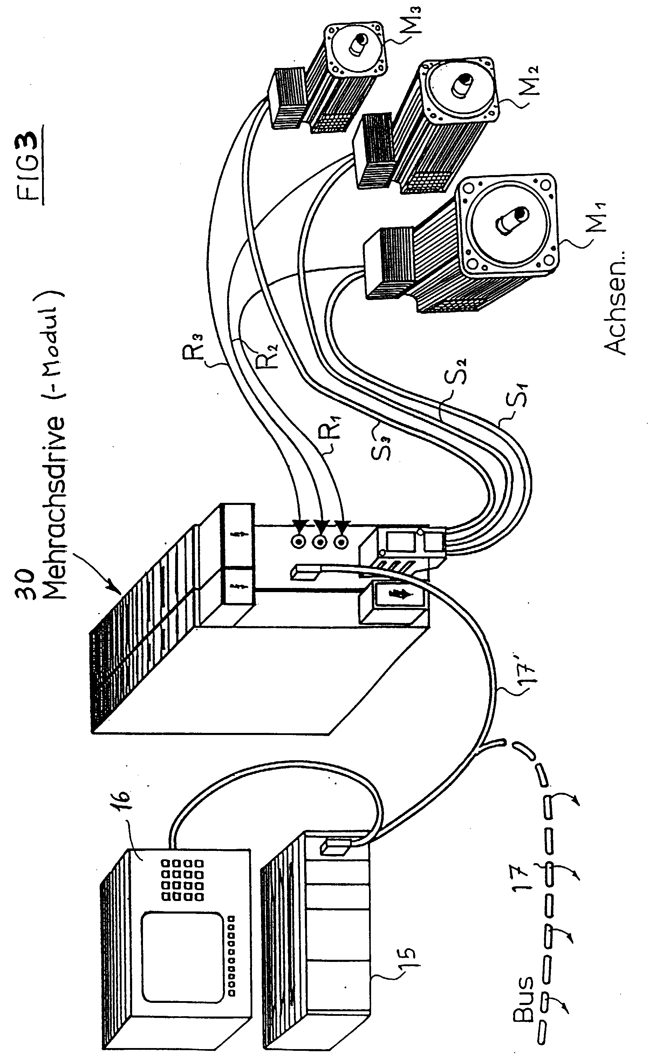

In der Figur 3 ist "hardwaremässig" eine Ausgestaltung der Erfindung als Mehrfachdrive bzw. Mehrachsdrive mit drei Achsen (M1, M2, M3) sehr vereinfacht dargestellt. Das Herzstück ist der Mehrachsdrive 30, der hier für die gleichzeitige, koordinierte Steuerung und Regelung von drei Achsen bzw. drei Motoren (M1, M2, M3) konzipiert ist. Die Datenübertragung kann über eine direkte Leitung 17' oder einen Datenbus 17, wie in der Figur 1 resp. Figur 2, erfolgen, je nach Ausbaugrad, resp. Komplexität der ganzen Steuerung. Die Visualisierung findet im Kommandogerät 16 z.Bsp. einem PC der Maschinensteuerung resp. des Maschinenrechners 15 statt. Grundkomponenten, auf denen die neue Lösung aufgebaut ist, ist die Steuerverbindung (S1, S2, S3) mit dem jeweiligen Motor (M1, M2, M3) sowie die Rückmeldeverbindung (R1, R2, R3) über welche insbesondere die $\varphi$-Kontrolle bzw. die Positions-Istwerte von jeder Achse rückgemeldet werden bzw. worüber die entsprechende interne Regelung stattfindet. Der Mehrachsdrive ist eine Motorsteuerung/Regelung für mehrere Achsen.

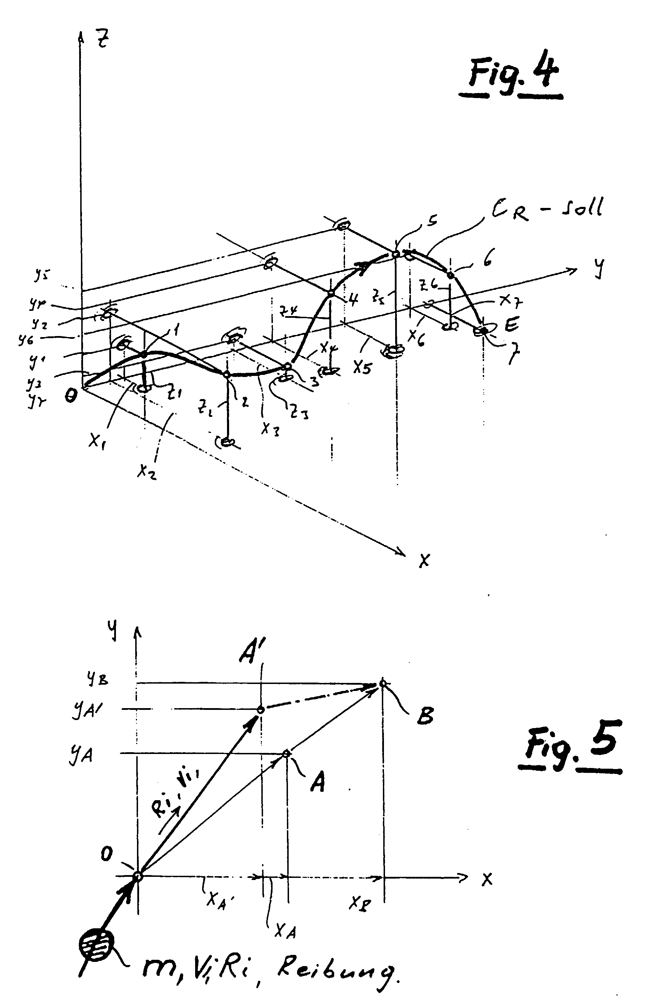

In der Folge wird nun auf die Figur 4 Bezug genommen, welche eine Raumkurve CR-soll in den Koordinaten X - Y - Z darstellt. Eine Grundaufgabe besteht darin, von dem Startpunkt 0 genau über die Kurve CR-soll zu dem Punkt E mit einer vorgegebenen Geschwindigkeit, allenfalls einen Geschwindigkeitsverlauf zu gelangen, z.Bsp. mit den Greifern eines Roboters oder dem Haken eines Krans. Figur 4 stellt damit den idealisierten Verlauf dar, wobei in genügend kurzen Teilschritten vorzugsweise im Millisekundenbereich jeweils für jede Koordinate bzw. jede entsprechende Achse M1, M2, M3 die zugehörigen neuen Bewegungsbefehle gegeben werden müssen.

Die Figur 5 veranschaulicht zwei Teilschritte von 0 zu A und von A zu B, nur in einer Eben X - Y. In der Figur 5 werden verschiedene nichtlogische Parameter wie Reibung (Ri) schwingende Masse (M) angenommen. Bei dem Punkt A bewegt sich die Masse in Richtung Ri mit einer bestimmten Geschwindigkeit Vi und erreicht nicht die Position A sondern A'. Die Position A' ist aber ausserhalb der Sollkurve O - A - B , so dass bei A' ein korrigierter Bewegungsbefehl für die beiden Richtungen X und Y errechnet und übergeben werden muss.

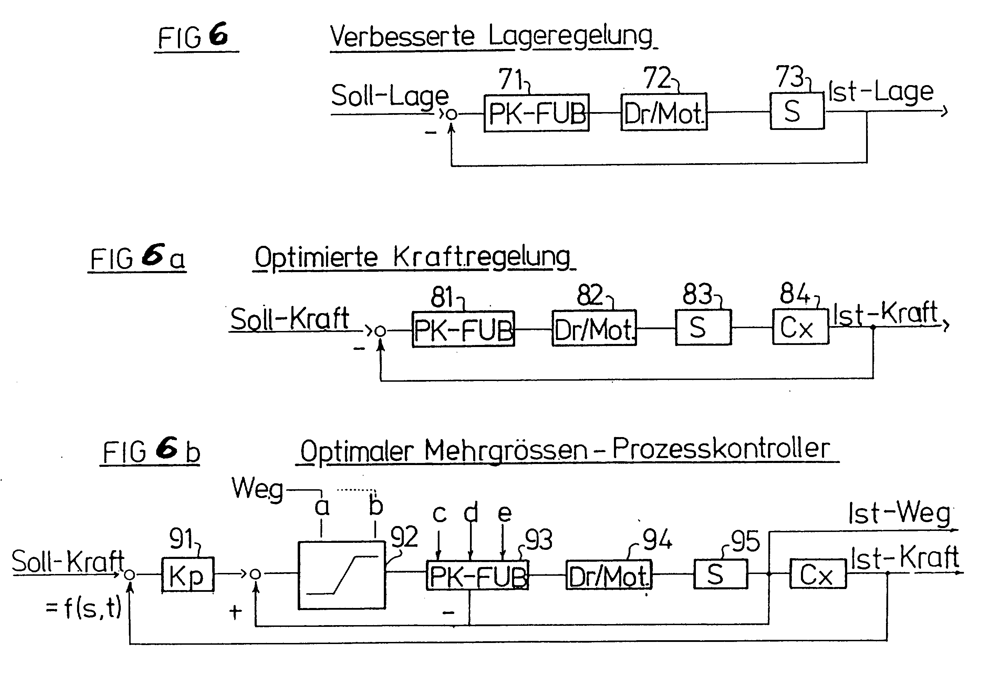

Die Figur 6 zeigt eine erfindungsgemässe, verbesserte Lageregelung, konkret für eine Spritzgiessmaschine, dabei sind:

71:    Positionskontroll-Funktionsbaustein
72:    Unterlagerter Drive/Motor-Geschwindigkeitsregler
73:    Mechanischer Integrator der Motordrehzahl zum Lage-ist-wert

Mit der zeit- bzw. beschleunigungs- oder verzögerungsoptimierten Annäherung an den Zielpunkt, beinhaltet der PK-FUB auch die Vorgabe der maximalen Beschleunigungs- und Verzögerungswerte, als auch den Wert für die erlaubte und anzustrebende Verfahrensgeschwindigkeit, die nicht überschritten werden darf.

Die Figur 6a zeigt eine optimierte Druckregelung, dabei bedeuten:

81:    Positionskontroll-Funktionsbaustein
82:    Unterlagerter Drive/Motor-Geschwindigkeitsregler
83:    Mechanischer Integrator der Motordrehzahl zum Lage-ist-wert
84:    Statische Systemdruckverstärkung (bar/m)

Es zeigt sich, bzw. lässt sich heute unter gewissen Randbedingungen auch mathematisch belegen, dass bei der Druckregelung die Analogie gilt, falls man hingeht und das Sollwegsignal mit dem Solldrucksignal und entsprechend die Istsignale vertauscht. Die Begründung liegt in der Tatsache, dass im statischen Fall ein unmittelbarer, linearer Zusammenhang zwischen Wegdifferenz und entsprechender Druckdifferenz besteht. Bei einer 1000 kN IMM beträgt die statische Systemdruckverstärkung ca. 200 (bar/mm) im vorderen Bewegungsbereich und vermindert sich auf ca. 1/3 dieses Wertes im hinteren Bereich. Damit für die Lage- und Druckregelung die gleichen Parameter verwendet werden können, muss die Druckdifferenz mit einem Skalierfaktor angepasst werden (Kp.)

Beispielsweise bei einem Spritzvorgang wird im allgemeinen Fall sowohl der Druck als auch die Geschwindigkeit vorgegeben. In der ersten Phase liegt die Priorität vielfach in der Geschwindigkeitskontrolle und später in der Druckvorgabe. Im weiteren muss in der Software des Einspritzkontrollers dafür gesorgt werden, dass die Endlagen nicht überfahren werden, das heisst, diese dürfen im Normalfall nicht berührt werden. Keinesfalls darf mit hoher Geschwindigkeit in die mechanischen Begrenzungen gefahren werden. Folgende Anforderungen stellen sich somit an den Spritzkontroller:

- Beherrschen der vorgegebenen (Maximal-) Beschleunigung und Verzögerung
- Beherrschen der (maximalen-) Spritzgeschwindigkeit = F (s,t)
- Beherrschen des (Maximal-) Spritzdruckes = f (s,t)
- Beherrschen des (Minimal/Maximal-) Weges → maschinentypisch.

Die Figur 6b zeigt einen, auf noch eine höhere Stufe optimierten Spritzkontroller, dabei bedeuten:

91: Anpassung der Kraft-Druckregelverstärkung
92: Positions(überlauf)begrenzungen
93: Positionskontroll-Funktionsbaustein
94: Unterlagerter Drive/Motor-Geschwindigkeitsregler mit unterlagertem Stromregler
95: Mech. Integrator der Motordrehzahl zum Lageistwert
96: Statische Systemkraft-Druckverstärkung (bar/m)
a: Maximalwegbegrenzung
b: Minimalwegbegrenzung
c: Sollbeschleunigung
d: Sollverzögerung
e: Sollspritzgeschwindigkeit = f (s,t)

Der optimierte Spritzkontroller lässt sich für spezifische Aufgaben noch weiter verbessern. So kann vor allem im Gross-Signalbereich als weitere Optimierung die Verstärkung Kp. bzw. Kz unsymetrisch ausgeführt werden, um von der höheren Winkelverzögerung unter Last Nutzen zu ziehen.

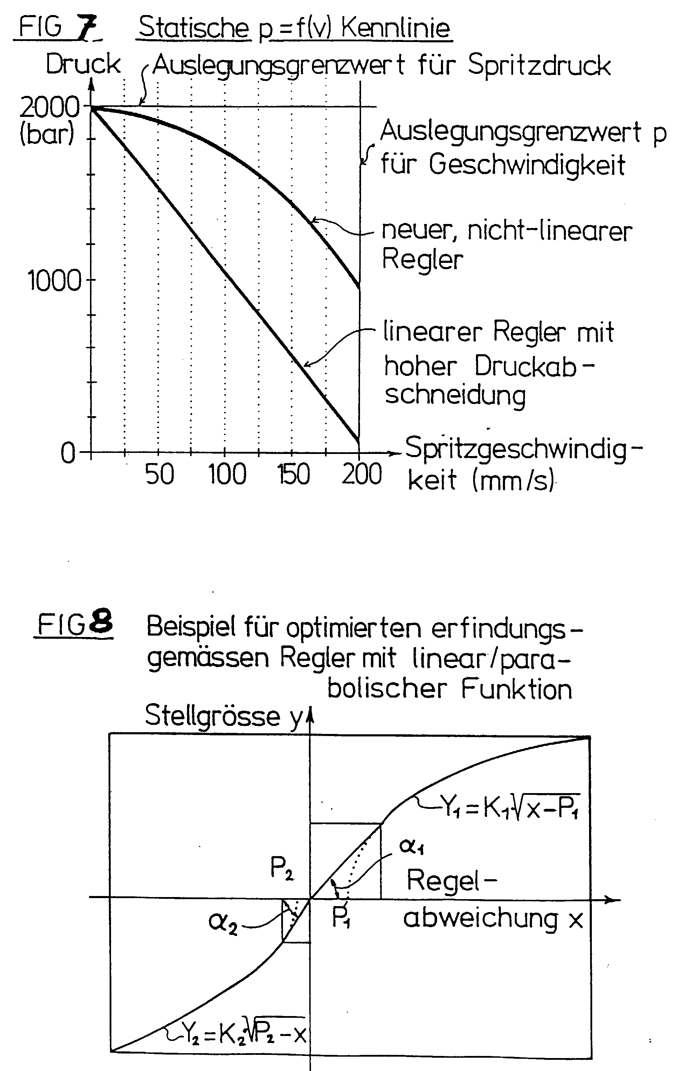

Gemäss Figur 7 ergibt sich bei der Drucksprungantwort ein nahezu idealer linear-Verlauf der Ist-Geschwindigkeit. Die Figur 7 zeigt zudem eine Gegenüberstellung der statischen Druck-Weg-Kennlinie. Dabei kommt sehr anschaulich zum Ausdruck, dass bei einem neuen, nicht-linearen Regler viel näher an die Auslegungsgrenzwerte heran gefahren werden kann.

Die Figur 8 zeigt den Funktionsverlauf eines linear-parabolischen Reglers. Damit im Kleinsignalbereich die hohe Verstärkung nicht zu Instabilitäten führt, wurde die Parabel im Bereich nahe der Sollposition durch eine herkömmliche lineare Funktion ersetzt. Es zeigt sich, dass bei der Lageregelung im Grossignalbereich mit einer parabelförmigen Abhängigkeit der Geschwindigkeit von der Sollwegdifferenz eine (zeit)optimale Verfahrfunktion erreicht werden kann. Mit anderen Worten wirken die Soll/Ist-Abweichungen beim neuen Regler vor allem parabelartig auf die Geschwindigkeits-Stellgrösse ein und nicht nur linear, wie bei herkömmlichen Reglern.

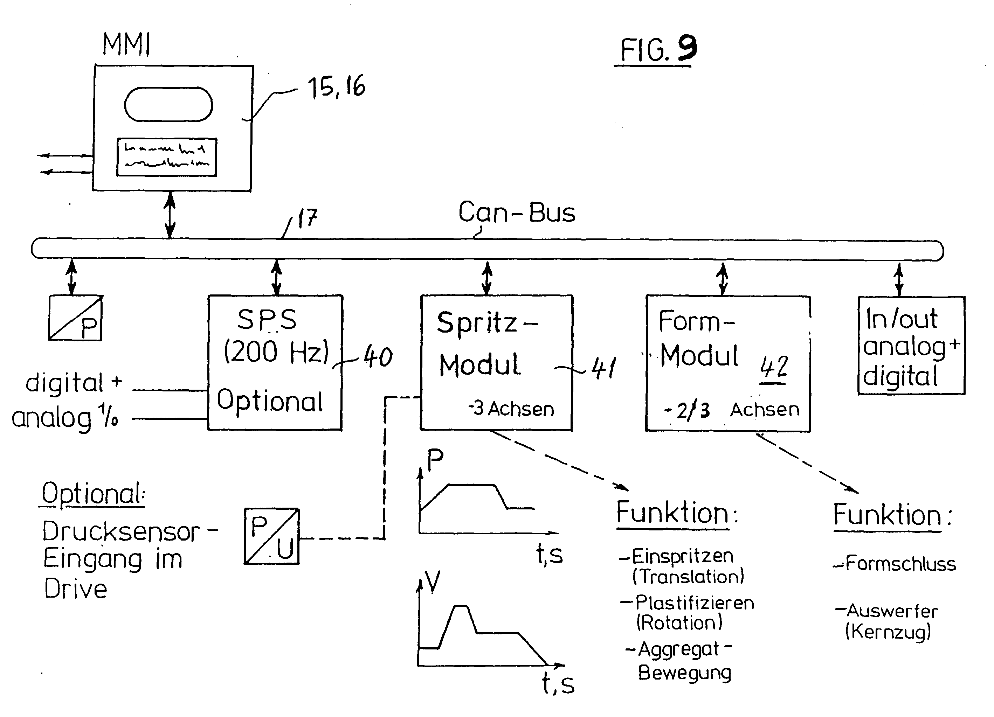

Die Figur 9 zeigt eine ganz besonders vorteilhafte Ausgestaltung einer Gesamtsteuerung wobei die Kommunikation über einen Feldbus 17 erfolgt. Alle Soll-Programme werden dabei in einem Rechner-Speicher zum Beispiel in einem PC 15 abgelegt und form- bzw. materialspezifisch für den jeweiligen Arbeitsauftrag bzw. der Herstellung einer bestimmten Anzahl gleicher Teile als Rezept zum Beispiel einer SPS überspielt und gegebenenfalls von dort aus über den Feldbus 17 zusammen mit allen übrigen Sensorsignalen koordiniert als Arbeitssignale abgegeben. In der Figur 9 sind je zwei Mehrachsendrive als Hardwareeinheit, als Modul 41 und Modul 42 zusammengefasst. Das Modul 41 koordiniert für das Beispiel der Spritzgiessmaschine die drei Achsen für Einspritzen (Translation), Plastifizieren (Rotation) sowie die Aggregatbewegung. Beim Modul 54 sind zwei Achsen aufgeführt: Formschluss sowie der Auswerfer (Kernzug). Andere Kombinationen sind auch möglich.

Zusammenfassend gestatten die erfindungsgemässen Lösungen einfache, überschaubare und stabile Maschinensteuerungen zu konzipieren,

- aufbauend von der eigentlichen Führung und Überwachung des Arbeitsvorganges an sich,
- gemäss einem besonders vorteilhaften neuartigen Mehrgrössenregler werden insbesondere Grundparameter wie Kraft, Geschwindigkeit und Wegführung in einer bisher nicht möglichen Art beherrscht,
- insbesondere werden die unmittelbar zusammenwirkenden Achsfunktionen als Regel- und Steuer-Modul für mehrere Achsen zusammengefasst.

Als Mehrgrössenregler wird vor allem, aber nicht ausschliesslich, die Regelung einer Achse bzw. eines Antriebes aber auf mehrere Zielgrössen hin verstanden. Dem Mehrgrössenregler wird (bildlich gesprochen) eine räumliche Hüll-Begrenzungs-Haube, bestehend aus den drei genannten Grundparametern, für jeden spezifischen Arbeitsauftrag als Rezept vorgegeben. (Der klassische Relger ist demgegenüber gekennzeichnet durch eine strenge Koppelung von Soll- und Istwert, wobei er immer aktiv ist und tendiert, diese beiden zur Übereinstimmung zu bringen.) Der Mehrgrössenregler weicht hiervon teilweise grundsätzlich ab. Da wenigstens zwei oder drei Sollwerte oder entsprechende Grenzwerte als Zielgrössen vorgegeben werden, ist im Normalfall jeweils nur eine der Grössen im klassischen Sinne geregelt bzw. begrenzt, während im entsprechenden Zeitpunkt die anderen Reglerteile inaktiv sind, jedoch die entsprechenden Werte überwachen. Konkret bedeutet dies, dass zum Beispiel bei Erreichen des maximalen vorgegeben Druckes (z.Bsp. 2000 bar) die entsprechende Druckregelung das Regelkommando übernimmt, während die beiden anderen regelungstechnisch inaktiv sind. Das gleiche gilt je für die anderen Parameter. Damit aber lässt sich tatsächlich eine Optimierung aller Grundparameter (Druck/Kraft, Geschwindigkeit usw.) mit den entsprechenden elektrischen Antrieben erreichen. Z.Bsp. im Falle der Einspritzschneckenregelung einer Spritzgiessmaschine wird für alle drei als Stellgrösse ein Geschwindigkeitssignal für die Axialbewegung der Einspritzschnecke gewählt. Die Maschine als ganzes kann also sowohl z.Bsp. den Spritzvorgang wie die Formschliessung mit einer neuen, einheitlichen Steuerung bzw. Regelungsphilosophie geführt werden, was die Beherrschung des ganzen Prozessablaufes erleichtert und insbesondere eine extrem grosse Flexibilität mit höchsten qualitativen Ergebnissen erlaubt. Die ganz besonders kritischen Phasen bzw. Bereiche des Prozesses können zudem mit einer bisher nicht erreichten Stabilität und Reproduzierbarkeit des Produktionsablaufes innerhalb einer sehr kurzen Gesamt-Zykluszeit geführt werden. Besonders vorteilhaft ist dabei die Kombination von Mehrgrössenregelung und Mehrachsdrive. Gemäss einer weiteren Ausgestaltung ist es ferner möglich, das Geschwindigkeitsstellsignal zu integrieren und als Wegstellsignal (evtl. in Form von Wegsignalen) zur Steuerelektronik (Drive mit integriertem Geschwindigkeits- und Lageregler) gesandt wird.

Ganz besonders vorteilhaft kann die neue Erfindung besonders für die Linearbewegungen zumindest für einen Teil vorzugsweise für alle Achsen eines Roboters z.Bsp. eines Schweissroboters oder eines Krans von der Driveintelligenz gesteuert bzw. koordiniert werden. Ferner bietet die neue Lösung bei Giess- und Pressmaschinen generell, so bei Druckgiess-Spritzgiess- resp. bei Dixotrophen-Pressen und bei Textil-und Papierverarbeitungsmaschinen sowie Werkzeugmaschinen z.Bsp. für Holz, Stein oder Metall, eine Verbesserung in Bezug auf die Beherrschung des Arbeitsprozesses.

**Patentansprüche**

1. Regelantrieb für Regelgrössen einer elekromotorisch angetriebenen Achse von Maschinen, der eine Steuer- und Regelvorrichtung mit einem internen Signalrechner (20) aufweist, welcher insbesondere die folgenden Funktionen zum Steuern und/oder Regeln der Regelgrössen umfasst: Phasenwinkelsteller ($\varphi$), Strom- (I) und Geschwindigkeitsregler (V),
**dadurch gekennzeichnet**,
dass ein getrennt anbringbarer, von einem Maschinenrechner (15, 16) unabhängiger Mehrgrössen-Regler (25) zum autonomen Steuern oder Regeln der Regelgrössen vorgesehen ist, der neben dem Signalrechner (20) einen diesem übergeordneten Prozessrechner (22) aufweist, der zur verzögerungsfreien, Echtzeit bzw. gleichzeitigen selektiven Steuerung oder Regelung der Regelgrössen ausgelegt ist und seine notwendigen Informationen aus einem im Mehrgrössen-Regler (25) vorgesehenen Speicher (24) bezieht.

2. Regelantrieb nach Anspruch 1,
**gekennzeichnet** durch
ein Modul (30), welches neben mehreren Signalrechnern (20) den Prozessrechner (22) aufweist, der zur verzögerungsfreien, gleichzeitigen Steuerung oder Regelung mehrere Achsen (M1, M2, M3) ausgelegt ist.

3. Regelantrieb für elektromotorisch angetriebene Achsen (M1, M2, M3) von Maschinen, der eine Steuer- und Regelvorrichtung mit einem oder mehreren internen Signalrechner/n (20) aufweist, welcher/welche insbesondere die folgenden Funktionen umfasst/umfassen: Phasenwinkelsteller ($\varphi$), Strom-(I) und Geschwindigkeitsregler (V),
**dadurch gekennzeichnet**,
dass ein getrennt anbringbares, von einem Maschinenrechner (15, 16) unabhängiges Modul (30) zum autonomen Steuern oder Regeln der Achsen (M1, M2, M3) vorgesehen ist, welches neben dem oder den Signalrechner/n (20) einen diesem oder diesen übergeordneten Prozessrechner (22) aufweist, der zur verzögerungsfreien, Echtzeit bzw, gleichzeitigen Steuerung oder Regelung der Achsen (M1, M2, M3) ausgelegt ist und seine notwendigen Informationen aus einem im Modul (30) vorgesehenen Speicher (24) bezieht.

4. Regelantrieb nach Anspruch 3,
**dadurch gekennzeichnet**,

dass der Prozessrechner (22) für wenigstens eine Achse (M1, M2, M3) als Mehrgrössen-Regler (25) ausgebildet ist, dem als Zielgrössen Grenzwerte von Regelgrössen (z.Bsp. Kraft und/oder Geschwindigkeit und/oder Weg) eingebbar sind.

**5.** Regelantrieb nach einem der Ansprüche 1 bis 4,
**dadurch gekennzeichnet**,
dass der Mehrgrössenregler (25) als Kaskadenregler ausgebildet ist.

**6.** Regelantrieb nach einem der Ansprüche 1 bis 5,
**dadurch gekennzeichnet**,
dass er eine Schnittstelle zu einem Datenbus (17) oder direkt zum Maschinenrechner (15, 16) aufweist.

**7.** Regelantrieb nach einem der Ansprüche 1 bis 6,
**dadurch gekennzeichnet**,
dass mehrere Arbeitsphasen mit unterschiedlichen Sollwerten oder Zielgrössen (z.Bsp. Kraft oder Geschwindigkeit oder Weg) im Mehrgrössen-Regler (25) festlegbar sind.

**8.** Regelantrieb nach einem der vorstehenden Ansprüche,
**dadurch gekennzeichnet**,
dass das Stellsignal bei kleinen Regelabweichungen eine lineare und bei grossen Regelabweichungen eine Wurzelfunktion der Regelabweichung ist.

**9.** Regelantrieb nach einem der vorstehenden Ansprüche,
**dadurch gekennzeichnet**,
dass der elektromotorische Antrieb (1) ein permanent erregter Servomotor, ein vektoriell geregelter Asynchronmotor, ein geregelter Gleichstrommotor, ein bürstenloser DC-Motor oder ein geschalteter Reluctance-Motor ist.

**10.** Regelantrieb nach einem der vorstehenden Ansprüche,
**dadurch gekennzeichnet**,
dass der Prozessrechner (22) für drei oder mehr Achsen ausgelegt ist.

**11.** Regelantrieb nach einem der vorstehenden Ansprüche,
**dadurch gekennzeichnet**,
dass bei Verarbeitungsmaschinen mit vier und mehr Achsen zwei oder mehrere Module (30) vorgesehen sind, die über Start- und Ablaufprogramme koordiniert sind.

**12.** Regelantrieb nach Anspruch 11,
**dadurch gekennzeichnet**,
dass ein Modul (30) als übergeordnetes Modul die Start- und Ablaufprogramme beinhaltet.

**13.** Regelantrieb nach einem der vorstehenden Ansprüche,
**dadurch gekennzeichnet**,
dass zumindest für einzelne Werte ein Sicherheitsgrenzband in einem Modul (30) festgelegt und seinem Prozessrechner (22) als Teil des Rezeptes bzw. des Programmes zur Überwachung übermittelt wird.

**14.** Verwendung des Regelantriebes nach einem der vorstehenden Ansprüche für Roboter, einschliesslich Schweissroboter, Druckgussmaschinen, Spritzgiessmaschinen, Krane, Giess- und Pressmaschinen, Textil- und Papierverarbeitungsmaschinen sowie Werkzeugmaschinen.

## Claims

**1.** Controller for controlled variables of an electric motor-driven shaft of machines which comprises an open- and closed-loop control device with an internal signal computer (20) which covers, in particular, the following functions for the open- and/or closed-loop control of the controlled variables: phase angle adjuster ($\varphi$), current (I) and velocity controller (V), characterized in that a separately mountable multi-variable controller (25) which is independent of a machine computer (15, 16) is provided for the autonomous open- or closed-loop control of the controlled variables and comprises, in addition to the signal computer (20), a higher-level process computer (22) which is designed for the delay-free, selective real-time or simultaneous selective open- or closed-loop control of the controlled variables and obtains the necessary information from a memory (24) provided in the multi-variable controller (25).

2. Controller according to claim 1, characterized by a module (30) which comprises, in addition to a plurality of signal computers (20), the process computer (22) which is designed for the delay-free, simultaneous open- or closed-loop control of a plurality of shafts (M1, M2, M3).

3. Controller for electric motor driven shafts (M1, M2, M3) of machines which comprises an open- and closed-loop control device with one or more internal signal computer/s (20) which covers/cover, in particular, the following functions: phase angle adjuster (φ), current (I) and velocity controller (V), characterized in that a separately mountable module (30) which is independent of a machine computer (15, 16) is provided for the autonomous open- or closed-loop control of the shafts (M1, M2, M3) which comprises, in addition to the signal computer/s (20) a higher-level process computer (22) which is designed for the delay-free real-time or simultaneous open- or closed-loop control of the shafts (M1, M2, M3) and obtains the necessary information from a memory (24) provided in the module (30).

4. Controller according to claim 3, characterized in that the process computer (22) is designed for at least one shaft (M1, M2, M3) as multi-variable controller (25) into which limit values of controlled variables (for example force and/or velocity and/or distance) can be input as target variables.

5. Controller according to one of claims 1 to 4, characterized in that the multi-variable controller (25) is designed as a cascade controller.

6. Controller according to one of claims 1 to 5, characterized in that it comprises an interface to a databus (17) or directly to the machine computer (15, 16).

7. Controller according to one of claims 1 to 6, characterized in that several phases of operation with different set values or target variables (for example force or velocity or distance) can be determined in the multi-variable controller (25).

8. Controller according to one of the preceding claims, characterized in that the adjusting signal is a linear function of the control deviation in the case of slight control deviations and a root function of the control deviation in the case of large control deviations.

9. Controller according to one of the preceding claims, characterized in that the electric motor drive (1) is a permanently excited servomotor, a vectorially controlled asynchronous motor, a controlled d.c. motor, a brushless d.c. motor or a switched reluctance motor.

10. Controller according to one of the preceding claims, characterized in that the process computer (22) is designed for three or more shafts.

11. Controller according to one of the preceding claims, characterized in that two or more modules (30) which are coordinated via start and sequential programs are provided in processing machines with four and more shafts.

12. Controller according to claim 11, characterized in that a module (30) contains the start and sequential programs as higher-level module.

13. Controller according to one of the preceding claims, characterized in that a safety limiting band in a module (30) is established at least for individual values and is imparted to its process computer (22) as part of the formulation or of the program for monitoring.

14. Use of the controller according to one of the preceding claims for robots, including welding robots, diecasting machines, injection-moulding machines, cranes, casting and pressing machines, textile and paper processing machines and machine tools.

**Revendications**

1. Servo-contrôle pour des grandeurs réglées d'un axe de machines entraîné par un moteur électrique, qui présente un dispositif de commande et de réglage avec un calculateur de signal interne (20), lequel comprend en particulier les fonctions suivantes pour la commande et/ou le réglage des grandeurs réglées : positionneur d'angle de phase (ϑ), régulateur de courant (I) et régulateur de vitesse (V), caractérisé en ce qu'il est prévu un régulateur à variables multiples (25), pouvant être posé séparément et indépendant d'un calculateur de machine (15, 16) pour la commande ou le réglage autonome des grandeurs réglées, qui présente parallèlement au calculateur de signal (20) un calculateur de processus (22) prioritaire sur celui-ci, qui est conçu pour la commande ou le réglage sélectif sans retard (en temps réel ou simultané) des grandeurs réglées et fait venir ses informations nécessaires d'une mémoire (24) prévue dans le régulateur à plusieurs grandeurs (25).

2. Servo-contrôle selon la revendication 1, caractérisé par un module (30), qui présente outre plusieurs calculateurs de signal (20) le calculateur de processus (22) qui est conçu pour la commande ou le réglage sans retard / simultané de plusieurs axes (M1, M2, M3).

3. Servo-contrôle pour des axes (M1, M2, M3) entraînés par moteur électrique de machines, qui présente un dispositif de commande et de réglage avec un ou plusieurs calculateur(s) de signal interne(s), lequel (lesquels) comprend (comprennent) les fonctions suivantes : positionneur d'angle de phase (ϑ), régulateur de courant (I) et régulateur de vitesse (V), caractérisé en ce qu'il est prévu un module (30) pouvant être placé séparément et indépendant d'un calculateur de machine (15, 16) pour la commande ou le réglage autonome des axes (M1, M2, M3), qui présente outre le ou les calculateur(s) de signal (20) un calculateur de processus (22) prioritaire sur celui-ci ou ceux-ci, lequel est conçu pour la commande ou le réglage sans retard, en temps réel ou simultané des axes (M1, M2, M3) et fait venir ses informations nécessaires d'une mémoire (24) prévue dans le module (30).

4. Servo-contrôle selon la revendication 3, caractérisé en ce que le calculateur de processus (22) est réalisé pour au moins un axe (M1, M2, M3) comme régulateur de plusieurs grandeurs (25), dans lequel on peut entrer des valeurs limites de grandeurs réglées (par exemple force et/ou vitesse et/ou déplacement) en tant que grandeurs cibles.

5. Servo-contrôle selon l'une quelconque des revendications 1 à 4 caractérisé en ce que le régulateur à plusieurs grandeurs (25) est réalisé comme un régulateur en cascade.

6. Servo-contrôle selon l'une quelconque des revendications 1 à 4, caractérisé en ce qu'il présente une interface avec un bus de données (17) ou directement avec le calculateur de machine (15, 16).

7. Servo-contrôle selon l'une quelconque des revendications 1 à 6, caractérisé en ce que plusieurs phases de travail peuvent être définies avec différentes valeurs de consigne ou grandeurs cibles (par exemple force ou vitesse ou déplacement) dans le régulateur à plusieurs grandeurs (25).

8. Servo-contrôle selon l'une quelconque des revendications précédentes, caractérisé en ce que le signal de commande est une fonction linéaire et une fonction de racine de l'écart de réglage respectivement dans le cas de petits écarts et de grands écarts.

9. Servo-contrôle selon l'une quelconque des revendications précédentes, caractérisé en ce que l'entraînement (I) ) par moteur électrique est un servomoteur excité en permanence, un moteur asynchrone régulé de façon vectorielle, un moteur régulé à courant continu, un moteur sans balai à courant continu ou un moteur commuté à réluctance.

10. Servo-contrôle selon l'une quelconque des revendications précédentes, caractérisé en ce que le calculateur de processus (22) est conçu pour trois axes ou plus.

11. Servo-contrôle selon l'une quelconque des revendications précédentes, caractérisé en ce que, sur les machines de traitement avec quatre axes et plus, il est prévu deux ou plusieurs modules (30) qui sont coordonnés par des programmes de démarrage et programmes d'exécution.

12. Servo-contrôle selon la revendication 11, caractérisé en ce qu'un module (30) en tant que module prioritaire contient les programmes de démarrage et d'exécution.

13. Servo-contrôle selon l'une quelconque des revendications précédentes, caractérisé en ce qu'une marge limite de sécurité est définie dans un module (30) au moins pour des valeurs individuelles et est transmise à son calculateur de processus (22) en tant que partie de la recette ou du programme pour le contrôle.

14. Utilisation du servo-contrôle selon l'une quelconque des revendications précédentes pour les robots, y compris les robots de soudure, les machines à coulée sous pression, les presses d'injection, les grues, les machines à couler et de presse, les machines de traitement des tissus et du papier, ainsi que les machines-outils.

FIG 1

Kommandogerät 16

Maschinenrechner 15

22 Driverechner

23 Driveintelligenz

26 Kontrolleinheit

24 Rezeptspeicher

Mehrgrössen - Prozesskontroller 25

Datenbus 17

Soll / Rezept

| $\varphi$ | I | V | Pos. | | | |

Re

Kontroller 20

21

D. Sp

14 "1 x"

F / U 12

13

Mehrgrössen - Prozesskontroller 25

EP 0 643 472 B1

Programmspeicher, Sollkurven
Startprogramm, Ablaufprogramm

FIG 2

15,16   Sp

MM I /
Sequenz

19

Sensoren 1,2,3,4..

M.

17  Sensor/Actor-Bus

Soll   Ist

Drive-Rechner 22

Signalrechner   Interpolator-21   Driveintelligenz 23

Rezept-Speicher 24

Kontroller 20₁, 20₂, 20₃

| Mehrgrössen-Prozesskontroller $P_1$ | Mehrgrössen-Prozesskontroller $P_2$ | Mehrgrössen-Prozesskontroller $P_3$ |
|---|---|---|
| $V_1$-Regler | $V_2$-Regler | $V_3$-Regler |
| $I_1$-Regler (Md) | $I_2$-Regler (Md) | $I_3$-Regler (Md) |
| $\mathcal{G}_1$-Kontrolle | $\mathcal{G}_2$-Kontrolle | $\mathcal{G}_3$-Kontrolle |

30
Mehrachs-Drive
(Modul)

Achsen →   M₁   M₂   M₃

EP 0 643 472 B1

FIG 3

30 Mehrachsdrive (-Modul)

$M_3$

$M_2$

$M_1$

$R_3$

$R_2$

$R_1$

$S_3$

$S_2$

$S_1$

Achsen..

17'

17

16

15

Bus

_Fig. 4_

_Fig. 5_

FIG **6**   <u>Verbesserte Lageregelung</u>

Soll-Lage $\rightarrow$ ○ — [PK-FUB] 71 — [Dr/Mot.] 72 — [S] 73 — Ist-Lage $\rightarrow$

FIG **6**a   <u>Optimierte Kraftregelung</u>

Soll-Kraft $\rightarrow$ ○ — [PK-FUB] 81 — [Dr/Mot.] 82 — [S] 83 — [Cx] 84 — Ist-Kraft $\rightarrow$

FIG **6**b   <u>Optimaler Mehrgrössen – Prozesskontroller</u>

Weg ——— a ⋯⋯ b

Ist-Weg

Soll-Kraft ○ — [Kp] 91 — ○ — [ ∕ ] 92 — c d e [PK-FUB] 93 — [Dr/Mot.] 94 — [S] 95 — [Cx] — Ist-Kraft

= f(s,t)    +    −

EP 0 643 472 B1

FIG 7   Statische p = f(v) Kennlinie

Druck   Auslegungsgrenzwert für Spritzdruck

2000
(bar)

Auslegungsgrenzwert p
für Geschwindigkeit

neuer, nicht-linearer
Regler

1000

linearer Regler mit
hoher Druckabschneidung

0

50   100   150   200   Spritzgeschwindigkeit (mm/s)

FIG 8   Beispiel für optimierten erfindungsgemässen Regler mit linear/para-
bolischer Funktion

Stellgrösse y

$Y_1 = K_1 \sqrt{x - P_1}$

$\alpha_1$

$P_2$

Regel-

$\alpha_2$   $P_1$   abweichung x

$Y_2 = K_2 \sqrt{P_2 - x}$

18

## FIG. 9

MMI

15,16

digital + analog ¹/ₒ

17

Can-Bus

SPS (200 Hz) Optional — 40

Spritz-Modul — 41
-3 Achsen

Form-Modul 42
-2/3 Achsen

In/out analog + digital

P

P/U

Optional:
Drucksensor-Eingang im Drive

Funktion:
-Einspritzen (Translation)
-Plastifizieren (Rotation)
-Aggregat-Bewegung

Funktion:
-Formschluss
-Auswerfer (Kernzug)

P / t,s

V / t,s